# EUROPEAN PATENT APPLICATION

(11) **EP 1 241 581 A1**
(43) Date of publication of application: **18.09.2002**
(21) Application number: 01870052.6
(22) Date of filing: 16.03.2001
(51) Int. Cl.: G06F 15/02, G06F 3/033

(54) **Document display device**

(71) Applicant: De Selys Longchamps, Patrick, 1495 Mellery (BE); Quartin Bastos, Luis, 2670 Loures (PT)
(72) Inventor: De Selys Longchamps, Patrick, 1495 Mellery (BE); Quartin Bastos, Luis, 2670 Loures (PT)
(74) Representative: Vandeberg, Marie-Paule L.G.

(57) **Abstract**

Display device (10) having a display screen (20) for displaying document information (30) organised into pages otherwise contained in a corresponding printed document (11) having a similar shape. Manipulation of such devices is not quite natural. In particular, the browsing of pages is not activated in a similar way as with the printed document (11). This problem is solved by arranging a finger-sensitive surface (50a) of a browsing sensor (50) to extend over an area (60) of the device (10) (10) corresponding to an area (61) of the printed document (11) on which a finger (70) is moved naturally for turning its pages and by activating browsing upon detection of a finger movement (80) on said finger-sensitive surface (50a) which is substantially the same as a natural movement (81) the finger (70) makes on the corresponding area (61) of the printed document (11) for turning its pages.

## Description

### Description of prior art

The invention relates to a document display device having a shape which is substantially similar to a shape of a printed document and including at least one display screen arranged on a surface of the device corresponding to a surface of the printed document on which a document information is printed, document memory means for storing the document information - text and/or graphics - organised into pages, a browsing sensor for producing browsing signals when actuated by a finger, control means for controlling the device to browse page(s) of the document information and to display the browsed pages on the at least one display screen in response to the browsing signals.

Such a document display device is known from patent number US 5,467,102 and is sometimes referred to as an "Electronic Book" or "E-Book" because it has a shape which is similar to a shape of a printed book and because it is an electronic device which basically renders the same services as a printed book. Such a known "E-book" comprises indeed a document memory containing document information organised into pages which can be browsed by a user, the browsed information being displayed on a display screen in a similar format as a format used with a printed book. The browsing of the document information is generally performed in response to the actuation of a browsing sensor or switch with a finger or an instrument.

Although such a known document display device works well in many circumstances, it's manipulation is not quite natural. In particular, the browsing is not activated as with a printed book. It is thus necessary to change one's habits and also to go through a learning process in order to activate the browsing. Moreover, failing to have strict standards - which is often the case with such fast moving new technologies - the manipulation of devices from different origins is often different, therefore requiring repetitive adaptation and eventually confusion.

These drawbacks may make people reluctant to using such known devices.

### Summary of the invention

It is an object of the invention to provide a document display device with a more natural activation of the browsing of the pages of document information, i.e. in a way which is substantially similar to that used with a corresponding printed document.

To this end, the document display device in accordance with the invention is characterised in that the browsing sensor comprises at least one finger-sensitive surface for sensing a substantially continuous finger movement along a direction on said finger-sensitive surface and for providing finger movement signals in response to said substantially continuous finger movement and having a means for generating browsing signals in response to said finger movement signals, said finger-sensitive surface extending at least partially over a contact area of the display device corresponding to an area of the printed document on which the finger is moved naturally to turn at least one page of said document.

The inventors have studied statistically how and where a user puts his finger(s) on various printed documents in order to turn their pages, or - expressed in terms of information browsing - to activate the browsing of the pages of document information. Based on the results of this study, they have found common activation patterns described hereafter.

Firstly, they have found that pages are not being turned by simply pushing with a finger on a surface of a printed page(s), but rather by performing a substantially continuous finger movement along a direction on a front or on a lateral surface of said page(s). The display device according to the invention therefore uses a browsing sensor which is able to detect such movements on it's finger-sensitive surface and which - upon detection - activates browsing by generating browsing signals.

Secondly, they have found that for turning a page(s), finger(s) are moved substantially on determined areas of a printed document. The display device according to the invention therefore has a browsing sensor whose finger-sensitive surface extends at least partially over a corresponding area of the device.

Consequently, with a document display device according to the invention, browsing will be activated when a user's finger performs a natural movement on a natural area of the display device, corresponding to the natural movement the finger makes on the corresponding area of a printed document to turn (a) page(s).

This greatly facilitates the manipulation of the document device, considerably shortens the learning process for using it, and intrinsically harmonises the manipulation of document display devices from different origins.

Preferably, the browsing sensor has a finger-sensitive surface which extends at least partially over a lateral face or over the display screen of the display device, since it is essentially on the corresponding areas of a printed document that a finger is moved for turning a page(s).

In a particular version, the display device comprises two parts - a left part comprising a left display screen and a right part comprising a right display screen - both parts being attached together by a hinge. Such a version is for displaying document information, the corresponding printed support of which can basically be opened to present a left part and a right part, such as a book, a magazine, a newspaper, a brochure, a manual, etc....

Hereafter follows a list of advantageous positions of the finger-sensitive surface(s) of the browsing sensor for such a particular version, together with the corresponding browsing actions performed by the control means upon receiving a browsing signal following to a particular movement of the finger on said advantageously positioned finger-sensitive surface :
- for a finger-sensitive surface arranged on a left side lateral face of the left part, the pages will be browsed backward in response to a finger movement on said surface along a direction away from the left display screen. This is similar to the natural movement of a finger on a corresponding face of a printed document for turning the pages backward, i.e. from left to right.
- for a finger-sensitive surface arranged on a top or bottom left lateral face of the left part, the pages will be browsed backward in response to a finger movement on said surface along a direction towards the left display screen. This is similar to the natural movement of a finger on a corresponding face of a printed document for turning the pages backward, i.e. from left to right.
- for a finger-sensitive surface arranged on a top or bottom left corner area of the left display screen, the pages will be browsed backward in response to a finger movement on said surface along a direction towards the hinge. This is similar to the natural movement of a finger on a corresponding area of the left page of a printed document for turning the pages backward, i.e. from left to right.
- for two finger-sensitive surfaces, a first surface arranged on a top or bottom left corner area of the left display screen and a second surface arranged respectively on a top or bottom lateral face of the left part, the pages will be browsed backward in response to a combination of a first finger contact on the first surface and a second finger movement on the second surface along a direction towards the left display screen. This is similar to the natural combined movement of fingers on the corresponding area and face of a printed document for turning the pages backward, i.e. from left to right.
- for two finger-sensitive surfaces, a first surface arranged on the left display screen and a second surface arranged on the left side lateral face of the left part, the pages will be browsed backward in response to a combination of a first finger contact on the first surface and a second finger movement on the second surface along a direction towards the left display screen. This is similar to the natural combined movement of fingers on the corresponding printed area and face of a printed document for turning the pages backward, i.e. from left to right.

As for the right part of the display device according to such a particular version, the finger-sensitive surface(s) of the browsing sensor is advantageously positioned and actuated in a reciprocal way with regard to the left part and leads to the pages being browsed forward, in a similarly way as for naturally turning the pages of a printed document forward i.e. from right to left.

These and other aspects of the invention are apparent from and will be elucidated with reference to the embodiments described hereafter.

### Short description of the drawings

In the drawings :
Fig. 1a and fig. 1b show schematically a front perspective view of respectively a display device according to an embodiment of the invention and a corresponding printed document;
Fig. 2 is a schematic block diagram of the document display device of Fig. 1a;
Fig. 3 shows schematically a perspective view of a preferred embodiment of a document display device according to the invention;
Fig. 4 shows schematically an exploded view of the front and lateral faces of the display device of Fig. 3;
Fig. 5 shows schematically an exploded view of the display device of Fig. 3; and
Fig. 6 is a schematic block diagram of a browsing sensor used by a display device according to the invention;

The figures are not drawn to scale. Generally, identical components are denoted by the same reference numerals in the figures.

### Detailed description of preferred embodiments

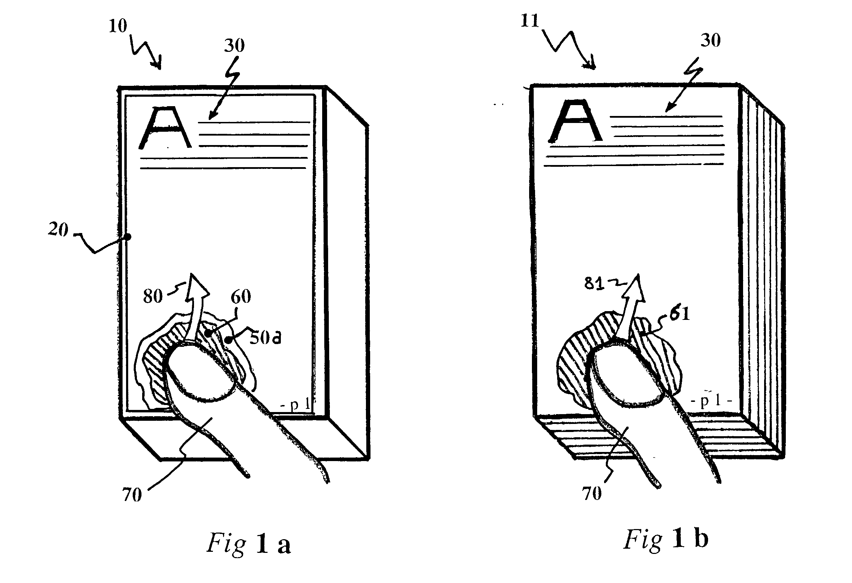

Fig. 1a and fig. 1b show schematically a front perspective view of respectively a document display device (10) according to the invention and a corresponding printed document (11). The display device (10) and the printed document (11) have a similar shape. The printed document contains document information (30) -text and/or graphics - printed on and thus organised into pages. The display device (10) comprises a memory means (40) for storing the pages of document information (30) in electronic form and a display screen (20) for displaying the stored pages in a format which is similar to a format used on the printed document (11).

For turning a page(s) of the printed document (11), one makes naturally a substantially continuous movement (81) with at least one finger (70) along a direction on a well determined area (61) of the printed document (11).

The display device (10) comprises a browsing sensor (50) having a finger-sensitive surface (50a) extending at least partially over an area (60) of the display device (10) corresponding to the well determined area (61) of the printed document (11). Upon detection by the device (10) of a continuous finger movement (80) along a direction on said finger-sensitive surface (50a), the pages of document information are browsed and displayed accordingly. Detailed operation of an exemplary browsing sensor is described below.

Consequently, with a document display device (10) according to the invention, the pages of document information (30) will be browsed when a user's finger performs a natural movement on a natural area of the display device (10), corresponding to a natural movement the finger makes on a corresponding area of a corresponding printed document (11) to turn a page(s).

Preferably, the browsing sensor (50) has a finger-sensitive surface (50a) which extends at least partially over a lateral face of the display device (10) or over the display screen (20) of the display device (10), since it is essentially on a lateral face or on the front face of a printed page of the corresponding printed document (11) that a finger (70) is naturally moved for turning the pages of the printed document (11).

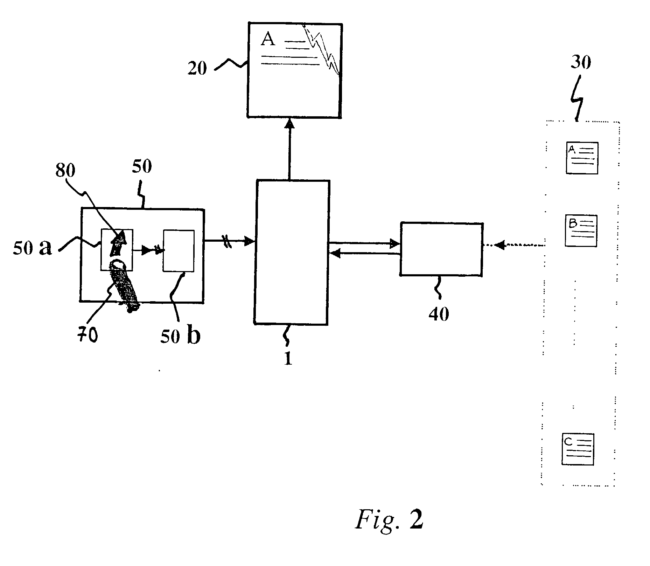

Fig. 2 is a schematic block diagram of the document display device of Fig. 1a. It shows the memory means (40) for storing the pages of document information (30) in electronic form, the display screen (20) for displaying the stored pages and a control means (1) for controlling the device (10) to browse the pages of document information (30) and to display the browsed pages on the display screen (20) in response to browsing signals received from the browsing sensor (50).

The browsing sensor (50) comprises at least one finger-sensitive surface (50a) for sensing the substantially continuous finger movement (80) along a direction on said finger-sensitive surface (50a) and for providing finger movement signals in response to said substantially continuous finger movement (80) and having a means (50b) for generating browsing signals in response to said finger movement signals (50).

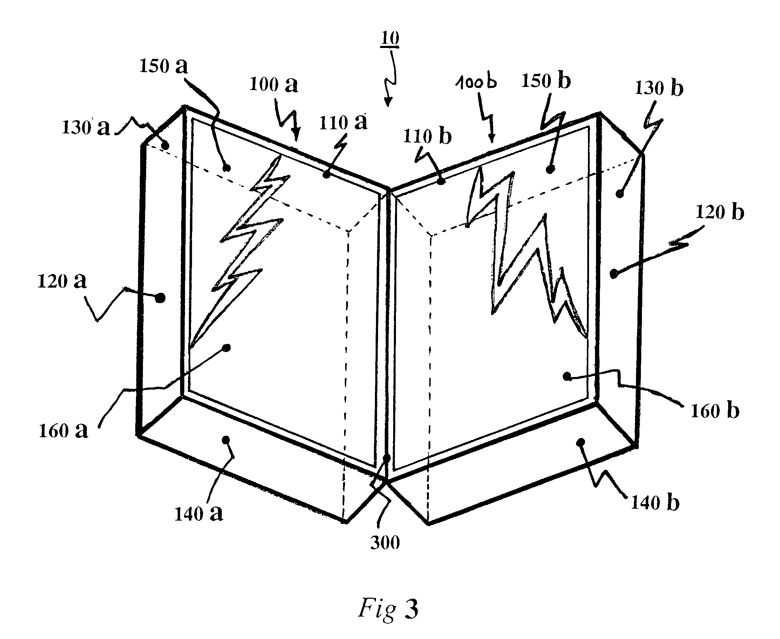

Fig. 3 shows schematically a perspective view of a preferred embodiment of a document display device (10) according to the invention. The device in such a preferred embodiment comprises two parts - a left part (100a) and a right part (100b) - attached together by a hinge (300) or any other means permitting the parts (100a, 100b) to be articulated. The shape of the device (10) corresponds to the shape of a printed book, magazine, manual or newspaper, or - in general - to the shape of any other printed document having two articulated parts. Two display screens are arranged on the device (10), a left display screen (110a) on a front face of the left part (100a) and a right display screen (110b) on a front face of the right part (100b). Both parts can be folder together with both display screens (110a, 110b) facing each other in a closed position. When in an open position - which is the position shown on fig. 3 - i.e. an unfolded position for reading the document information displayed on the display screens (110a, 110b), the left part (100a) presents itself left of the hinge (300) and the right part (100b) right of the hinge (300). The description following hereafter refers to the display device (10) in such open position, corresponding to the open position of the corresponding printed document.

In this preferred embodiment, the finger-sensitive surface (50a) of the browsing sensor (50) also extends at least partially over a lateral face of the display device (10) or over a left display screen (110a) or a right display screen (110b) of the display device (10).

Hereafter follows a list of preferred positions of the finger-sensitive surface (50a) for such a preferred embodiment, together with the corresponding browsing actions performed by the control means (1) upon receiving a browsing signal from the sensor (50) in response to a particular movement of the finger (70) on said finger-sensitive surface (50a) :
- for a finger-sensitive surface (50a) extending at least partially over a left side lateral face (120a) of the left part (100a), the browsing sensor (50) will deliver a browsing signal causing the control means (1) to browse the pages of document information (30) backward in response to a continuous finger movement on said surface (50a) along a direction away from the left display screen (110a). This is similar to the natural movement of a finger on a corresponding left side lateral face of a printed document for turning the pages backward, i.e. from left to right;
- for a finger-sensitive surface (50a) extending at least partially over a top lateral face (130a) or over a bottom lateral face (140a) of the left part (100a), the browsing sensor (50) will deliver a browsing signal causing the control means (1) to browse the pages of document information (30) backward in response to a continuous finger movement on said surface (50a) along a direction towards the left display screen (110a) This is similar to the natural movement of a finger on a corresponding top left or bottom left lateral face of a printed document for turning the pages backward, i.e. from left to right;
- for a finger-sensitive surface (50a) extending at least partially over a top left corner area (150a) or over a bottom left corner area (160a) of the left display screen (110a), the browsing sensor (50) will deliver a browsing signal causing the control means (1) to browse the pages of document information (30) backward in response to a continuous finger movement on said surface (50a) along a direction towards the hinge (300). This is similar to the natural movement of a finger on a corresponding top left or bottom left corner area of a printed face of a left page of a printed document for turning the page backward, i.e. from left to right;
- for two finger-sensitive surfaces, a first surface extending at least partially over the left display screen (110a) and a second surface extending at least partially over respectively a top lateral face (130a) or bottom lateral face (140a) of the left part (100a), the browsing sensor (50) will deliver a combined browsing signal causing the control means (1) to browse the pages of document information (30) backward in response to a combination of a first finger contact on the first surface and a second continuous finger movement on the second surface along a direction towards the left display screen (110a). This is similar to the natural combined contact and movement of fingers on respectively the corresponding area and face of a printed document for turning the pages backward, i.e. from left to right;
- for two finger-sensitive surfaces, a first surface extending at least partially over the left display screen (110a) and a second surface extending at least partially over the left side lateral face (120a) of the left part (100a), the browsing sensor (50) will deliver a combined browsing signal causing the control means (1) to browse the pages of document information (30) backward in response to a combination of a first finger contact on the first surface and a second continuous finger movement on the second surface along a direction towards the left display screen (110a). This is similar to the natural combined contact and movement of fingers on respectively the corresponding printed area and face of a printed document for turning the pages backward, i.e. from left to right.

As for the right part of the display device according to such a preferred embodiment, the finger-sensitive surface(s) of the browsing sensor is advantageously positioned and actuated in a reciprocal way with regard to the left part and leads to the pages being browsed forward, in a similar way as for naturally turning the pages of a printed document forward i.e. from right to left.
More precisely :
- for a finger-sensitive surface (50a) extending at least partially over a right side lateral face (120b) of the right part (100b), the browsing sensor (50) will deliver a browsing signal causing the control means (1) to browse the pages of document information (30) forward in response to a continuous finger movement on said surface (50a) along a direction away from the right display screen (110b). This is similar to the natural movement of a finger on a corresponding right side lateral face of a printed document for turning the pages forward, i.e. from right to left;
- for a finger-sensitive surface (50a) extending at least partially over a top lateral face (130b) or over a bottom lateral face (140b) of the right part (100b), the browsing sensor (50) will deliver a browsing signal causing the control means (1) to browse the pages of document information (30) forward in response to a continuous finger movement on said surface (50a) along a direction towards the right display screen (110b). This is similar to the natural movement of a finger on a corresponding top right or bottom right lateral face of a printed document for turning the pages forward, i.e. from right to left;
- for a finger-sensitive surface (50a) extending at least partially over a top right corner area (150b) or over a bottom right corner area (160b) of the right display screen (110b), the browsing sensor (50) will deliver a browsing signal causing the control means (1) to browse the pages of document information (30) forward in response to a continuous finger movement on said surface (50a) along a direction towards the hinge (300). This is similar to the natural movement of a finger on a corresponding top right or bottom right corner area of a printed face of a right page of a printed document for turning the page forward, i.e. from right to left;
- for two finger-sensitive surfaces, a first surface extending at least partially over the right display screen (110b) and a second surface extending at least partially over respectively a top lateral face (130b) or bottom lateral face (140b) of the right part (100b), the browsing sensor (50) will deliver a combined browsing signal causing the control means (1) to browse the pages of document information (30) forward in response to a combination of a first finger contact on the first surface and a second continuous finger movement on the second surface along a direction towards the right display screen (110b). This is similar to the natural combined contact and movement of fingers on respectively the corresponding area and face of a printed document for turning the pages forward, i.e. from right to left;
- for two finger-sensitive surfaces, a first surface extending at least partially over the right display screen (110b) and a second surface extending at least partially over the right side lateral face (120b) of the right part (100b), the browsing sensor (50) will deliver a combined browsing signal causing the control means (1) to browse the pages of document information (30) forward in response to a combination of a first finger contact on the first surface and a second continuous finger movement on the second surface along a direction towards the right display screen (110b). This is similar to the natural combined contact and movement of fingers on respectively the corresponding printed area and face of a printed document for turning the pages forward, i.e. from right to left.

It is to be noted that the terms "forward" and "backward" are to be regarded with reference to the page(s) displayed immediately before a finger movement occurs.

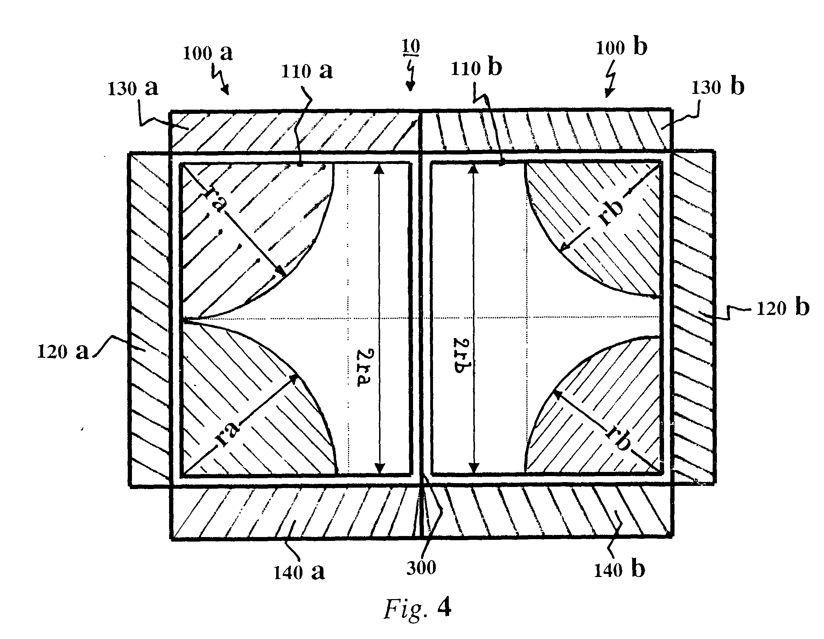

Preferably, the finger sensitive surface (50a) of the browsing sensor (50) extends at least partially over one of the shaded areas shown in figure 4, since these are the areas on which - according to the statistical studies performed by the inventors - a finger is mostly moved for turning the pages of a corresponding printed document.

There may also be several finger-sensitive surfaces, each one extending at least partially over one of the preferred positions listed here above and/or over one of the shaded areas shown in figure 4.

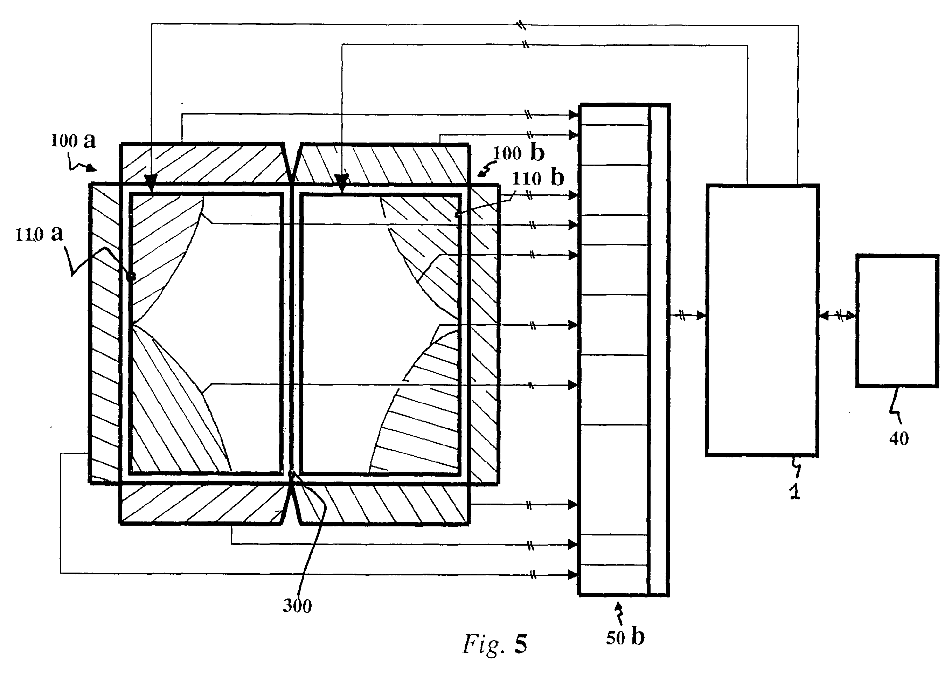

Fig. 5 shows schematically an exploded view of a display device according to Fig. 3. It shows in particular the left part (100a) and the right part (100b) with the areas over which the sensitive surfaces of the browsing sensor are preferably arranged. This display device comprises 10 distinct finger-sensitive surfaces, each one extending over a preferred area as shown in fig. 4, and each one delivering finger movement signals to the means for generating browsing signals (50b). The control means (1) receives the browsing signals generated by the means for generating browsing signals (50b) following to the detection of a natural movement of a finger over one of said surfaces and in response thereto controls the device (10) to browse the pages of document information (30) stored in the document memory (40) and to display the browsed pages on the display screens (110a, 110b) according to which particular movement is detected on which particular surface .

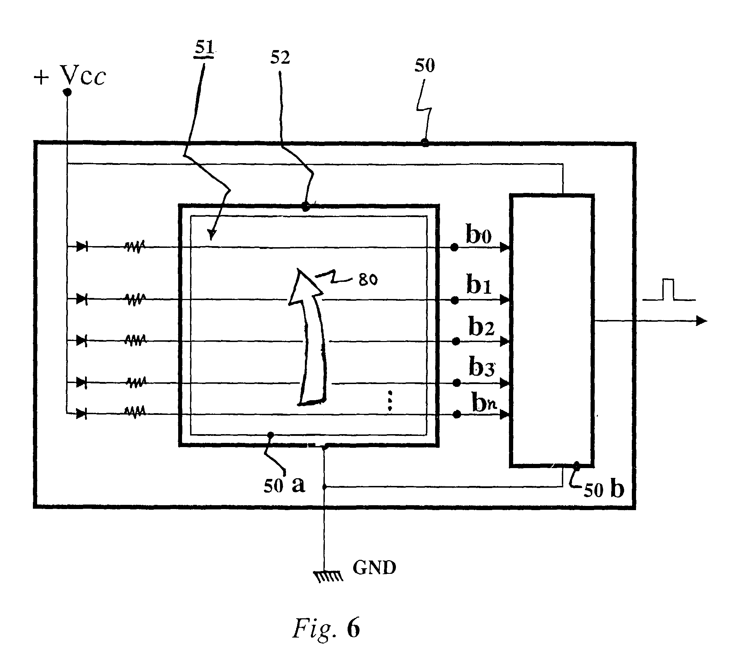

Now follows an example of a browsing sensor (50) which is useable by a display device (10) according to the invention. Such a browsing sensor (50) is schematically shown on Fig. 6.

The finger-sensitive surface (50a) of this browsing sensor (50) comprises a series of "n" parallel conductive strips (51) - the distance between said strips (51) depending on the desired accuracy of the sensor (50) - and a conductive backplate (52) arranged at a distance behind said strips (51), so that a series of contacts are established between the strips (51) and the backplate (52) when a finger pushes on the finger-sensitive surface (50a). The strips (51) are connected on their one side to a positive supply voltage (+Vcc) and on their opposite side to the input of the browsing signal generating means (50b) whereas the backplate is connected to ground (GND), so that the series of contacts results in the corresponding inputs of the browsing signal generating means (50b) to go from +Vcc to GND. Attributing a logical level 1 to +Vcc and a logical level 0 to GND, binary words of n bits (b0-bn) are thus constituted at said input. The browsing signal generating means (50b) samples these inputs over time and analyses them. It (50b) decides that a finger movement along a direction transversal to the strips (51) is detected when the average bit position (a number between 0 and n) of a group of consecutive zero bits changes significantly over a certain number of successive samples. It (50b) further decides that such a movement is continuous when there is always at least one bit at zero during said certain number of successive samples. Following to the further decision, it (50b) issues a browsing signal for the attention of the control means (1).

Here are a few examples of sampled words of 16 bits for a sensor with 16 strips, as well as the corresponding decision of the sensor (50). In these examples, the successive sampling times are designated by "ti" .
- Example of words sampled in the absence of a finger contact : 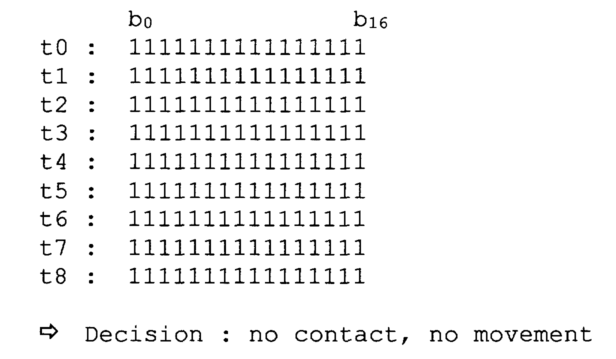
- Example of words sampled in the presence of a finger contact, but without any finger movement : 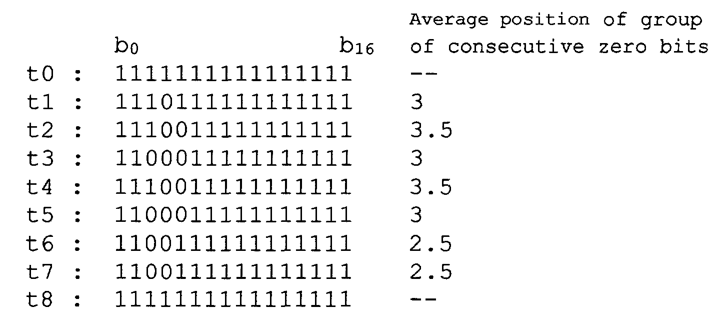 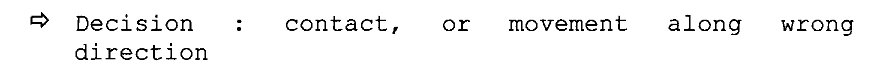
- Example of words sampled with a finger movement along a direction which is substantially parallel to the strips : 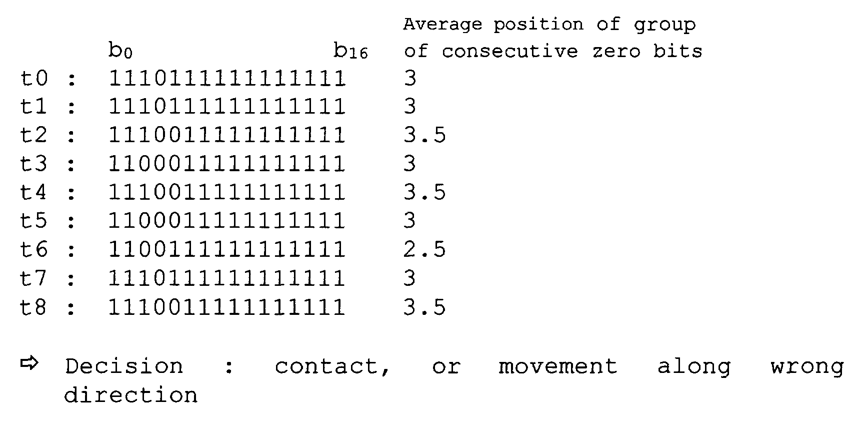
- Example of words sampled with a discontinuous finger movement along a direction which is substantially transversal to the strips : 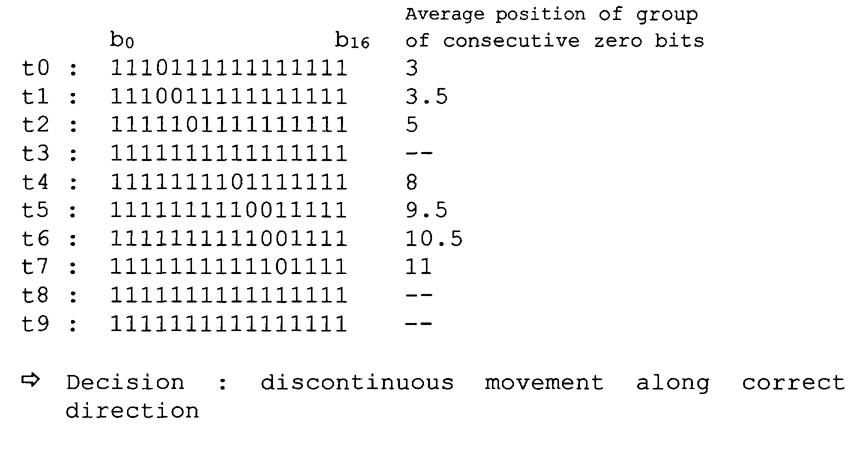
- Example of words sampled with a continuous finger movement along a direction which is substantially transversal to the strips :

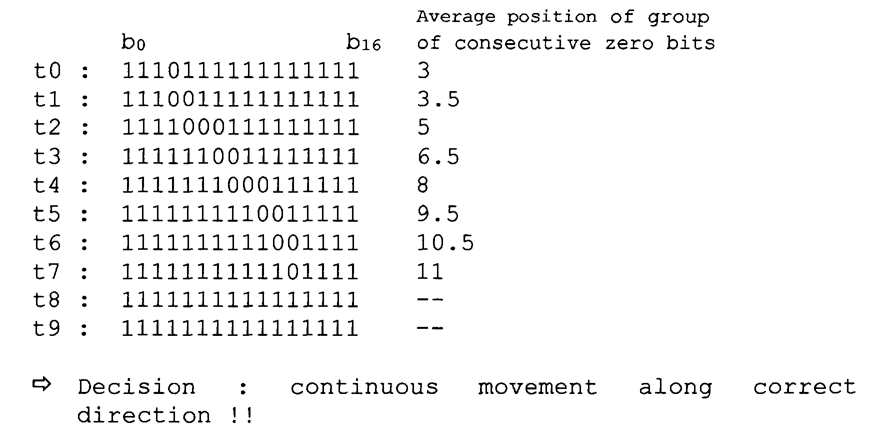

The kind of movement detected by the browsing sensor (50) is thus any substantially continuous movement in a direction which is substantially transversal to the conductive strips (51) of the sensor (50). It is to be noted that the sensor (50) is also able to distinguish a movement in one sense along a direction from a movement in the opposite sense along the same direction. It therefore checks whether the average position of the group of consecutive zero bits increases or decreases with time. This feature is being used for example for distinguishing movements in a direction towards and away from a display screen, and/or for distinguishing movements in a direction towards and away from the hinge.

From these characteristics of the browsing sensor (50), it will be clear how the conductive strips (51) of such an exemplary sensor (50) must be oriented in order to detect the various natural finger movements described above.

This particular sensor (50) is only given by way of example. Other sensors making use of other electrical quantities (such as capacity, resistance, inductance) and/or making use of other quantities (such as electromagnetic, optical) for generating movement signals may also be used.

The mechanical and/or electrical design of the sensor may also vary. In particular, the sensor might not comprise a browsing signal generating means (50b), in which case the movement signals could for example directly be delivered by the sensor (50) to the control means (1) for analysis, decision and actuation of browsing. Conversely, the sensor (50) may comprise a plurality of browsing signal generating means . The sensor may also comprise a plurality of distinct finger-sensitive surfaces . In order to increase the accuracy, a finger-sensitive surface (50a) may also comprise two series of parallel conductive strips arranged perpendicularly so as to form a matrix structure.

The display device (10) may also comprise a plurality of browsing sensors.

Given that the display device can be manipulated naturally, it is possible (and it is in some cases advantageous) to dissimulate the finger-sensitive surface (50a) of the browsing sensor (50) in such a way that the user of the device (10) can visually not identify the position and/or the way of manipulating the finger-sensitive surface (50a) for activating browsing. Therefore, in a particular embodiment of the invention, the device (10) does not comprise any marking in relation to a finger-sensitive surface (50a) of a sensor (50) . In particular, the device (10) in such a particular embodiment does not comprise any marking indicating where and/or how to operate the browsing sensor (50).

It is to be noted that the present invention does not limit itself to "E-books", but extends to all other display devices intended to display document information otherwise contained in a printed support comprising multiple pages such as magazines, newspapers, catalogues, manuals, etc...

It is also to be remarked that above description corresponds to a device intended to browse and to display pages as with a Western style printed document, i.e. a printed document whereby browsing the pages backward means turning the pages from left to right. Evidently, the invention also covers devices intended to browse and display pages as with some Eastern style printed documents i.e. a printed document whereby browsing the pages backward means turning the pages from right to left, mutatis mutandis.

In short the invention may be described as follows : Electronic device for displaying document information organised into pages otherwise contained in a corresponding printed document having a similar shape. Manipulation of such devices is not quite natural. In particular, the browsing of pages is not activated in a similar way as with a printed document. This problem is solved by arranging finger-sensitive surface(s) of browsing sensor(s) to extend over areas of the device corresponding to well determined areas of the printed document on which a finger moves for turning its pages and by activating browsing upon detection of a finger movement on said finger-sensitive surface(s) which is substantially the same as the movement the finger makes on said determined areas of the printed document for turning its pages.

## Claims

1. Document display device (10) having a shape which is substantially similar to a shape of a printed document (11) and including at least one display screen (20) arranged on a surface of the device (10) corresponding to a surface of the printed document (11) on which a document information (30) is printed, document memory means (40) for storing the document information (30) - text and/or graphics - organised into pages, a browsing sensor (50) for producing browsing signals when actuated by a finger (70), control means (1) for controlling the device (10) to browse page(s) of the document information (30) and to display the browsed pages on the at least one display screen (20) in response to the browsing signals,
**characterised in that** the browsing sensor (50) comprises at least one finger-sensitive surface (50a) for sensing a substantially continuous finger movement (80) along a direction on said finger-sensitive surface (50a) and for providing finger movement signals in response to said substantially continuous finger movement (80) and having a means (50b) for generating browsing signals in response to said finger movement signals, said finger-sensitive surface (50a) extending at least partially over a contact area (60) of the display device (10) corresponding to an area (61) of the printed document (11) on which the finger (70) is moved naturally to turn at least one page of said document (11).

2. Document display device according to claim 1, **characterised in that** the contact area (60) is a lateral face of the document display device (10).

3. Document display device according to claim 1, **characterised in that** the contact area (60) is a surface of the at least one display screen (20).

4. Document display device according to claim 2 or 3, **characterised in that** the display device comprises two parts, a left part (100a) and a right part (100b), both parts being attached together by a hinge (300), and **in that** a left display screen (110a) is arranged on the left part (100a) and a right display screen (110b) is arranged on the right part (100b).

5. Document display device according to claim 4, **characterised in that** the contact area (60) is a left side lateral face (120a) of the left part (100a) and **in that** the direction of the finger movement (80) is a direction away from the left display screen (110a), and **in that** - in response to the browsing signal so generated - the control means (1) controls the device (10) to browse the pages of document information (30) backward.

6. Document display device according to claim 4 or 5, **characterised in that** the contact area (60) is a top left lateral face (130a) of the left part (100a) and **in that** the direction of the finger movement (80) is a direction towards the left display screen (110a), and **in that** - in response to the browsing signal so generated - the control means (1) controls the device (10) to browse the pages of document information (30) backward.

7. Document display device according to anyone of claims 4 to 6, **characterised in that** the contact area (60) is a bottom left lateral face (140a) of the left part (100a) and **in that** the direction of the finger movement (80) is a direction towards the left display screen (110a), and **in that** - in response to the browsing signal so generated - the control means (1) controls the device (10) to browse the pages of document information (30) backward.

8. Document display device according to anyone of claims 4 to 7, **characterised in that** the contact area (60) is a top left corner area (150a) of the left display screen (110a) and **in that** the direction of the finger movement (80) is a direction towards the hinge (300), whereby - in response to the browsing signal so generated - the control means (1) controls the device (10) to browse the pages of document information (30) backward.

9. Document display device according to anyone of claims 4 to 8, **characterised in that** the contact area (60) is a bottom left corner area (160a) of the left display screen (110a) and **in that** the direction of the finger movement (80) is a direction towards the hinge (300), whereby - in response to the browsing signal so generated - the control means (1) controls the device (10) to browse the pages of document information (30) backward.

10. Document display device according to anyone of claims 4 to 9, **characterised in that** the browsing sensor (50) comprises two finger-sensitive surfaces, a first surface extending at least partially over the left display screen (110a) for providing first finger movement signals upon sensing of a first finger contact on the first surface, and a second surface extending at least partially over a top left lateral face (130a) of the left part (100a) for providing second finger movement signals upon sensing of a second finger movement along a direction towards the left display screen (110a) on the second surface, a combined browsing signal being generated by the browsing signal generating means (50b) upon detection of a simultaneous existence of the first and second finger movement signals, whereby - in response to said combined browsing signal - the control means (1) controls the device (10) to browse the pages of document information (30) backward.

11. Document display device according to anyone of claims 4 to 10, **characterised in that** the browsing sensor (50) comprises two finger-sensitive surfaces, a first surface extending at least partially over the left display screen (110a) for providing first finger movement signals upon sensing of a first finger contact on the first surface, and a second surface extending at least partially over a bottom left lateral face (140a) of the left part (100a) for providing second finger movement signals upon sensing of a second finger movement along a direction towards the left display screen (110a) on the second surface, a combined browsing signal being generated by the browsing signal generating means (50b) upon detection of a simultaneous existence of the first and second finger movement signals, whereby - in response to said combined browsing signal - the control means (1) controls the device (10) to browse the pages of document information (30) backward.

12. Document display device according to anyone of claims 4 to 11, **characterised in that** the browsing sensor (50) comprises two finger-sensitive surfaces, a first surface extending at least partially over the left display screen (110a) for providing first finger movement signals upon sensing of a first finger contact on the first surface, and a second surface extending at least partially over a left side lateral face (120a) of the left part (100a) for providing second finger movement signals upon sensing of a second finger movement along a direction towards the left display screen (110a) on the second surface, a combined browsing signal being generated by the browsing signal generating means (50b) upon detection of a simultaneous existence of the first and second finger movement signals, whereby - in response to said combined browsing signal - the control means (1) controls the device (10) to browse the pages of document information (30) backward.

13. Document display device according to anyone of claims 4 to 12, **characterised in that** the contact area (60) is a right side lateral face (120b) of the right part (100b) and **in that** the direction of the finger movement (80) is a direction away from the right display screen (110b), and **in that** - in response to the browsing signal so generated - the control means (1) controls the device (10) to browse the pages of document information (30) forward.

14. Document display device according to anyone of claims 4 to 13, **characterised in that** the contact area (60) is a top right lateral face (130b) of the right part (100b) and **in that** the direction of the finger movement (80) is a direction towards the right display screen (110b), and **in that** - in response to the browsing signal so generated - the control means (1) controls the device (10) to browse the pages of document information (30) forward.

15. Document display device according to anyone of claims 4 to 14, **characterised in that** the contact area (60) is a bottom right lateral face (140b) of the right part (100b) and **in that** the direction of the finger movement (80) is a direction towards the right display screen (110b), and **in that** - in response to the browsing signal so generated - the control means (1) controls the device (10) to browse the pages of document information (30) forward.

16. Document display device according to anyone of claims 4 to 15, **characterised in that** the contact area (60) is a top right corner area (150b) of the right display screen (110b) and **in that** the direction of the finger movement (80) is a direction towards the hinge (300), whereby - in response to the browsing signal so generated - the control means (1) controls the device (10) to browse the pages of document information (30) forward.

17. Document display device according to anyone of claims 4 to 16, **characterised in that** the contact area (60) is a bottom right corner area (160b) of the right display screen (110b) and **in that** the direction of the finger movement (80) is a direction towards the hinge (300), whereby - in response to the browsing signal so generated - the control means (1) controls the device (10) to browse the pages of document information (30) forward.

18. Document display device according to anyone of claims 4 to 17, **characterised in that** the browsing sensor (50) comprises two finger-sensitive surfaces, a first surface extending at least partially over the right display screen (110b) for providing first finger movement signals upon sensing of a first finger contact on the first surface, and a second surface extending at least partially over a top right lateral face (130b) of the right part (100b) for providing second finger movement signals upon sensing of a second finger movement along a direction towards the right display screen (110b) on the second surface, a combined browsing signal being generated by the browsing signal generating means (50b) upon detection of a simultaneous existence of the first and second finger movement signals, whereby - in response to said combined browsing signal - the control means (1) controls the device to browse the pages of document information (30) forward.

19. Document display device according to anyone of claims 4 to 18, **characterised in that** the browsing sensor (50) comprises two finger-sensitive surfaces, a first surface extending at least partially over the right display screen (110b) for providing first finger movement signals upon sensing of a first finger contact on the first surface, and a second surface extending at least partially over a bottom right lateral face (140b) of the right part (100b) for providing second finger movement signals upon sensing of a second finger movement along a direction towards the right display screen (110b) on the second surface, a combined browsing signal being generated by the browsing signal generating means (50b) upon detection of a simultaneous existence of the first and second finger movement signals, whereby - in response to said combined browsing signal - the control means (1) controls the device to browse the pages of document information (30) forward.

20. Document display device according to anyone of claims 4 to 19, **characterised in that** the browsing sensor (50) comprises two finger-sensitive surfaces, a first surface extending at least partially over the right display screen (110b) for providing first finger movement signals upon sensing of a first finger contact on the first surface, and a second surface extending at least partially over a right side lateral face (120b) of the right part (100b) for providing second finger movement signals upon sensing of a second finger movement along a direction towards the right display screen (110b) on the second surface, a combined browsing signal being generated by the browsing signal generating means (50b) upon detection of a simultaneous existence of the first and second finger movement signals, whereby - in response to said combined browsing signal - the control means (1) controls the device to browse the pages of document information (30) forward.

21. Document display device according to anyone of claims 4 to 20, **characterised in that** at least one of the finger sensitive surfaces (50a) extends at least partially over one of the shaded areas shown in fig.4 .

22. Document display device according to anyone of claims 1 to 21, **characterised in that** the display device (10) does not comprise any browsing sensor marking for the attention of the user of the device (10).
